# EUROPEAN PATENT APPLICATION

(11) **EP 2 237 499 A1**
(43) Date of publication of application: **06.10.2010**
(21) Application number: 08870716.1
(22) Date of filing: 29.12.2008
(51) Int. Cl.: H04L 12/56

(54) **A METHOD, DEVICE AND SYSTEM FOR CONTROLLING THE PACKET SIZE FOR MEDIA TRANSMISSION**

(30) Priority: 29.12.2007 CN 200710307875
(71) Applicant: Huawei Technologies Co., Ltd., Longgang District, Shenzhen Guangdong 518129 (CN)
(72) Inventor: LIN, Yangbo, Guangdong 518129 (CN)
(74) Representative: Barth, Stephan Manuel
(86) International application number: PCT/CN2008/073810
(87) International publication number: WO 2009/089758

(57) **Abstract**

A method, device and system for controlling the packet size for media transmission are provided. The method includes the following steps: a media gateway (MG) receives a command request sent by a media gateway controller (MGC), where the command request carries a property that triggers the MG to determine a media block size; and the MG determines the media block size and transmits media according to the property.

## Description

This application claims priority to Chinese Patent Application No. 200710307875.6, filed with the Chinese Patent Office on December 29, 2007 and entitled "Method, Device and System for Controlling the Packet Size for Media Transmission", which is incorporated herein by reference in its entirety.

### Field of the Invention

The present invention relates to communications technologies, and in particular, to a method, device and system for controlling the packet size for media transmission.

### Background of the Invention

With the development of communications technologies, the public switched telephone network conventionally dominated by circuit switching is gradually changing to the next generation network dominated by packet switching. The media gateway controller (MGC) and media gateway (MG) are two key components of a packet network under a service and bearer separated architecture. The MGC deals with service control and the MG is the media bearer so that the service control plane is separated from the media bearer plane. Thus, network resources are fully shared, equipment upgrade and service expansion are simplified, and the costs of development and maintenance are lower.

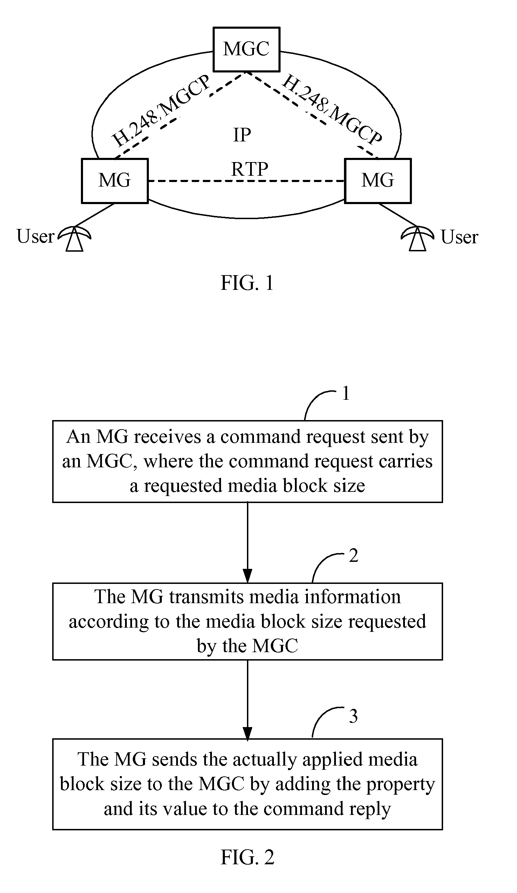

FIG. 1 shows the networking of the MGC and MG. Packet networks are generally based on the Internet Protocol (IP). MGs communicate with each other over the Real-time Transport Protocol (RTP). An MG communicates with an MGC over a (media) gateway control protocol. At present, such protocols in wide use include the Media Gateway Control Protocol (MGCP) and the MGCP-based Gateway Control Protocol (H.248/ MeGaCo).

When a user requests a media service (for example playing a media stream), it is possible that the media stream must be transmitted in a given packet size. The packet size does not include the header part of lower layer protocols, such as IP, User Datagram Protocol (UDP), and RTP. Under an architecture where the MGC and MG are separated, after the MGC receives the media service request, the MGC must send control information about the packet size to the MG when the MGC instructs the MG to allocate or adjust the requested media resource and later, the MGC may modify or audit the control information. The (media) gateway control protocol, however, does not provide such support.

### Summary of the Invention

The purpose of the present invention is to provide a method for controlling the packet size for media transmission, which is able to control the media block size. The method includes: receiving, by an MG, a command request sent by an MGC, where the command request includes a requested media block size; and by the MG, transmitting media according to the media block size sent by the MGC. The MG uses a media block size not larger than the requested media block size to transmit the media.

An MGC provided in an embodiment of the present invention includes: a first sending unit, adapted to send a command request to an MG, where the command request includes a requested media block size; and a first receiving unit, adapted to receive a command reply from the MG, where the command reply carries an actually applied media block size.

An MG provided in an embodiment of the present invention includes: a second receiving unit, adapted to receive a command request from an MGC, where the command request includes a requested media block size; a block size controlling unit, adapted to determine an actually applied media block size and control media transmission according to the property; and a second sending unit, adapted to send a command reply to the MGC, where the command reply carries the actually applied media block size.

A system for controlling the packet size for media transmission includes an MGC and an MG. The MGC is adapted to send a command request to the MG, where the command request includes a requested media block size, and receive a command reply from the MG, where the command reply carries an actually applied media block size. The MG is adapted to: receive the command request from the MGC, determine the actually applied media block size according to the property and control media transmission, and send the command reply to the MGC.

In the technical solution, the embodiments of the present invention enable the MGC to control the media block size of the MG. Particularly, the MGC can send control information about the packet size to the MG and later can modify or audit the control information. Further, the embodiments of the present invention extend the prior protocols and are well compatible with the prior protocols so that the implementation of the present invention is easy and efficient.

### Brief Description of the Drawings

FIG. 1 shows the networking of the MGC and MG in a prior art;
FIG. 2 is a flowchart of a method in an embodiment of the present invention;
FIG. 3 shows a logical structure of an MGC in an embodiment of the present invention;
FIG. 4 shows a logical structure of an MG in an embodiment of the present invention;
   and
FIG. 5 shows a structure of a system in an embodiment of the present invention.

### Detailed Description of the Invention

An embodiment of the present invention provides a method for controlling the packet size for media transmission. With the method, under an architecture where the MGC and MG are separated, after the MGC receives a media service request from a user, the MGC can send control information about the packet size for media transmission to the MG when the MGC instructs the MG to allocate or adjust the requested media resource and the MGC can later modify or audit the packet size control information. Accordingly, an MGC, an MG and a system are provided by embodiments of the present invention. The embodiments are described hereinafter in detail.

Taking H.248 as an example, resources on an MG are abstracted as terminations in the prior art. The terminations include physical terminations and ephemeral terminations. The physical terminations represent some physical entities with semi-permanent existence, such as time division multiplexing (TDM) timeslots. The ephemeral terminations represent some public resources that are requested ephemerally and released after use, such as Real-time Transport Protocol (RTP) streams. A root termination represents the MG entirety.

Taking H.248 as an example, associations between terminations are abstracted as contexts. A context may include multiple terminations and the relations between the terminations are described by a topology. A termination that is not associated with other terminations is included by a special context called Null.

Based on the above abstract connection model, interactions between services and bearers are in fact operations on terminations and contexts. Such operations are completed via the request and reply of commands between the MGC and the MG. The commands include Add, Modify, Subtract, Move, AuditValue, AuditCapabilities, Notify, and ServiceChange. Command parameters are also called descriptors which are classified into Property, Signal, Event and Statistic. For convenience, parameters with service relevance are logically aggregated as a package.

The control of the MG by the MGC may be specific to a termination or a stream on the termination.

Features that are not stream-specific on a termination are described by TerminationState descriptors, such as ServiceState and EventBufferControl.

Stream-specific features on a termination are described by Media descriptors that include a series of stream descriptors. Each stream descriptor is specific to one stream and includes LocalControl, Local and Remote. The LocalControl descriptor carries stream related control information, such as Mode, ReserveGroup, and ReserveValue. The Local and Remote descriptors carry features of streams received at the local and remote ends, such as the address, port and codec algorithm, in the form of the Session Description Protocol (SDP).

Implementation of the present invention first relies on extensions to the protocols used in the prior art. Specifically:
A property is added in the prior (media) gateway control protocol (including but not limited to H.248 and MGCP) to indicate the packet size for media transmission. The property may be defined in a prior package or a new package. The new package is defined herein as a Media Block Size (mbz) Package and the property is named Size, used in the format of mbz/size.

The property type is integer and the value is measured by bytes or octets. Different default values may be set specific to the media format or media type. Those skilled in the art can decide the values according to the needs of service implementation.

The Size property is applicable to a termination or a stream on the termination.

If the property is applied to a termination, it is defined and transmitted in a TerminationState descriptor. If the property is applied to a stream, it is defined and transmitted in a LocalControl descriptor.

The property is readable and writable, which means the MGC can write the property to an MG to control the media block size and can read the property from the MG to know the current media block size.

On the basis of the above extension to the prior protocols, the method in an embodiment of the present invention includes the following steps, as shown is FIG. 2:
(1) When the MGC requests the MG to allocate or adjust media resources via an Add, Modify, or Move command, the MGC informs the MG of the media block size requested for media transmission through the request by setting a value of a media block size property in the request.
(2) The MG transmits a media stream according to the media block size requested by the MGC.

The MG may freely apply a media block size not larger than the value of the media block size requested by the MGC. The determination of the actually applied media block size may be as follows:
The MG adopts an integral multiple of the minimum block size closest to but not larger than the requested block size to transmit media, where the minimum block size depends on the media type and/or media format. That is, the MG chooses an integral multiple of the minimum block size closest to the requested block size to transmit media.

For example, when the MGC sends a Modify command requesting the MG to add a stream for a termination, mbz/size=1024 contained in the LocalControl descriptor indicates the MGC requests the MG to use 1,024 bytes as the block size of the media stream. Assume that the minimum block size is 500 bytes. The MG may choose 1,000 bytes which is two times the minimum block size as the media block size actually applied to the media stream.

If necessary, for example, when a particular media type or format already decides the media block size, the MG may use the media block size decided by the particular media type or format to replace the media block size requested by the MGC for media transmission.

For example, when the MGC sends a Modify command requesting the MG to add a stream for a termination, mbz/size=1024 contained in the LocalControl descriptor indicates the MGC requests the MG to use 1,024 bytes as the block size of the media stream. Assume that the media type and/or media format of the media stream decides that the block size is 1,500 bytes. Then the MG may directly use 1,500 bytes as the media block size applied to the media stream instead of the 1,024 bytes requested by the MGC.
(3) The MG sends the actually applied media block size to the MGC by the property and its value to the command reply.

In the above method, when the MGC applies the property to a termination ( the property is contained in a TerminationState descriptor), the MG thinks that the MGC requests to apply the media block size to all media streams on the termination. When the MGC applies the property to a stream (the property is contained in a LocalControl descriptor), the MG thinks that the MGC requests to apply the media block size to the media stream.

If the MGC needs to apply the property to a particular media resource on a termination or stream, the MGC may inform the MG of the identifier of the media resource in the Add, Modify, or Move command. The MG will apply the media block size to the media resource on the termination or the stream associated with the resource identifier according to the media resource identifier.

In the Add, Modify, or Move command request, the MGC may set the property value to "Choose $ (wildcard)", indicating that the MGC lets the MG determine the media block size and send the determined media block size back to the MGC. In addition, the MGC may send an AuditValue command request containing the property to the MG, indicating that the MGC wishes to know the media bock size applied by the MG. The MG feeds back the actually applied block size to the MGC through a command reply by setting the value of the property in the command reply. If the MG fails to make a decision based on known information (for example, through a Remote descriptor), the MG sends the corresponding error information to the MGC, for example, error code 473 which indicates lack of required information.

Those skilled in the art understand that all or part of the steps in the method in the foregoing embodiment of the present invention can be implemented by hardware following instructions of a program. The program may be stored in a computer readable storage medium, such as a read-only memory (ROM), a random access memory (RAM), a magnetic disk or a compact disk.

The following describes the implementation of the devices provided in embodiments of the present invention.

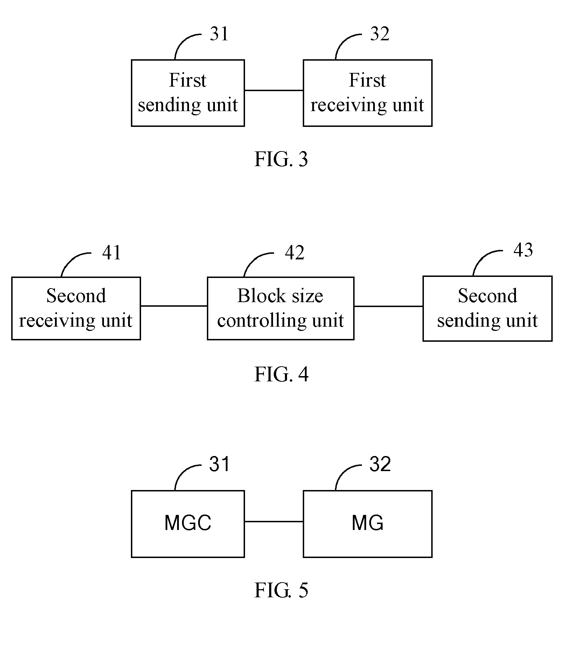

FIG. 3 shows the logical structure of an MGC in an embodiment of the present invention. The MGC includes a first sending unit 31 and a first receiving unit 32.

The first sending unit 31 is adapted to send a command request to an MG, where the command request includes the requested media block size.

In the embodiment, when the MGC requests the MG to allocate or adjust media resources via an Add, Modify, or Move command, the first sending unit 31 sends the value of the media block size to the MG.

When the MGC applies the property to a termination (the property is contained in a TerminationState descriptor), the MG thinks that the MGC requests to apply the media block size to all media streams on the termination. When the MGC applies the property to a stream (the property is contained in a LocalControl descriptor), the MG thinks that the MGC requests to apply the media block size to the media stream.

If the MGC needs to apply the property to a particular media resource on a termination or stream, the first sending unit 31 of the MGC may inform the MG of the identifier of the media resource in the Add, Modify, or Move command.

The first receiving unit 32 is adapted to receive the command reply from the MG, where the command reply includes the actually applied media block size.

FIG. 4 shows the logical structure of an MG in an embodiment of the present invention. The MG includes a second receiving unit 41, a block size controlling unit 42, and a second sending unit 43.

The second receiving unit 41 is adapted to receive the command request from an MGC, where the command request includes the requested media block size.

The block size controlling unit 42 is adapted to determine the actually applied media block size according to the requested media block size and transmit media.

In the embodiment, the MG may freely use a block size not larger than the media block size requested by the MGC. The determination of the media block size applied by the MG is as follows:
The MG adopts a media block size which is closest to but not larger than the requested block size and is an integral multiple of the minimum block size for transmission of the media, where the minimum block size is decided by the media type or media format. That is, the MG chooses an integral multiple of the minimum media block size closest to the requested media block size.

If necessary, the MG may directly use a particular media block size to replace the media block size requested by the MGC.

The second sending unit 43 is adapted to send the command reply to the MGC, where the command reply includes the actually applied media block size.

The second sending unit 43 sends media according to the media block size.

On the basis of the embodiment, the second sending unit 43 is further adapted to send the media block size actually applied by the MG back to the MGC. When the MGC sends an Add, Modify, or Move command to indicate the media block size applied by the MG, the MG may send the actually applied media block size to the MGC by adding the property extended in the protocol by the present invention to the command reply.

FIG. 5 shows the structure of a system for controlling the packet size for media transmission in an embodiment of the present invention. The system includes an MGC 51 and an MG 52.

The MGC 51 is adapted to: send a command request to the MG 52, where the command request carries a requested media block size, and receive the corresponding command reply from the MG 52, where the command reply carries the actually applied media block size.

The MG 52 is adapted to: receive the command request from the MGC 51, determine the actually applied media block size according to the requested media block size and transmit media, and send the command reply to the MGC 51.

In the system, the MG uses a media block size not larger than the requested size to transmit media. In particular, (1) the MG uses an integral multiple of the minimum media block size of a particular media format and/or type closest to the requested media block size to transmit media; or (2) the MG uses the media block size decided by the particular media format and/or type to transmit media.

The MG further sends the actually applied media block size to the MGC via the command reply in response to the command request.

In the system, the command request sent by the MGC is an Add, Modify, or Move command.

Further, in the system, the media block size may be sent via the command request in the following way: (1) the MGC sets the requested media block size in the TerminationState descriptor in the command request and the MG obtains the media block size from the TerminationState descriptor; or (2) the MGC sets the requested media block size in the LocalControl descriptor in the command request and the MG obtains the media block size from the LocalControl descriptor.

Although the method, device and system for controlling the media block size in the present invention has been described through exemplary embodiments, the invention is not limited to such embodiments. It is apparent that those skilled in the art can make various modifications and variations to the invention without departing from the spirit and scope of the present invention. The invention is intended to cover the modifications and variations provided that they fall within the scope of protection defined by the claims or their equivalents.

## Claims

1. A method for controlling the packet size for media transmission, comprising:
receiving, by a media gateway (MG), a command request sent by a media gateway controller (MGC), wherein the command request carries a property that triggers the MG to determine a media block size; and
by the MG, determining the media block size according to the property and transmitting media.

2. The method of claim 1, wherein:
the property comprises a requested media block size and the MG determines the media block size according to the requested media block size and transmits media.

3. The method of claim 2, wherein:
the step of transmitting media according to the media block size sent by the MGC comprises:
using, by the MG, a media block size not larger than the requested media block size to transmit media.

4. The method of claim 3, wherein:
the step of transmitting media according to the media block size sent by the MGC comprises:
using, by the MG, a media block size which is closest to the requested media block size and which is an integral multiple of a minimum media block size decided by a particular media format and/or type to transmit media.

5. The method of claim 2, wherein:
the step of transmitting media according to the media block size sent by the MGC comprises:
using, by the MG, the particular media block size decided by the particular media format and/or type to transmit media, if a particular media format and/or type has a particular media block size.

6. The method of any of claims 1-5, wherein:
the command request sent by the MGC is an Add, Modify, or Move command request.

7. The method of any of claims 1-5, wherein:
the MG obtains the requested media block size from a TerminationState descriptor in the command request; or
the MG obtains the requested media block size from a LocalControl descriptor in the command request.

8. The method of claim 7, wherein:
the command request sent by the MGC further comprises a resource identifier of a particular media resource; and
the MG obtains the resource identifier and adjusts the media block size of the particular media resource associated with the resource identifier.

9. The method of claim 2, wherein:
the MG further sends an actually applied media block size to the MGC via a command reply in response to the command request.

10. A media gateway controller (MGC) device, comprising:
a first sending unit, adapted to send a command request to a media gateway (MG), wherein the command request carries a property that triggers the MG to determine a media block size; and
a first receiving unit, adapted to receive a command reply from the MG, wherein the command reply carries an actually applied media block size.

11. The device of claim 10, wherein:
the property comprises a requested media block size.

12. The device of claim 10 or 11, wherein:
the command request sent by the first sending unit further indicates an identifier of a media resource corresponding to the media block size property value.

13. The device of claim 10 or 11, wherein:
the first sending unit adds the requested media block size to a TerminationState descriptor; or
the first sending unit adds the requested media block size to a LocalControl descriptor.

14. A media gateway (MG) device, comprising:
a second receiving unit, adapted to receive a command request from a media gateway controller (MGC), wherein the command request carries a property that triggers the MG to determine a media block size;
a block size controlling unit, adapted to determine an actually applied media block size according to the property and transmit media; and
a second sending unit, adapted to send a command reply to the MGC, wherein the command reply carries the actually applied media block size.

15. The device of claim 14, wherein:
the property comprises a requested media block size; and
the block size controlling unit determines the actually applied media block size according to the requested media block size and transmit media.

16. The device of claim 15, wherein:
the block size controlling unit determines the actually applied media block size as an integral multiple of a minimum media block size of a particular media format and/or type closest to but not larger than the requested media block size.

17. The device of claim 14, wherein:
the block size controlling unit determines the actually applied media block size as a media block size decided by a particular media format and/or type.

18. The device of claim 14 or 15, wherein:
the second receiving unit is further adapted to obtain the requested media block size from a TerminationState descriptor; or
the second receiving unit is further adapted to obtain the requested media block size from a LocalControl descriptor.

19. A system for controlling the packet size for media transmission, comprising a media gateway controller (MGC) and a media gateway (MG), wherein:
the MGC is adapted to: send a command request to the MG, wherein the command request carries a property that triggers the MG to determine a media block size, and receive a command reply from the MG, wherein the command reply carries an actually applied media block size; and
the MG is adapted to: receive the command request from the MGC, determine the actually applied media block size according to the property and transmit media, and send the command reply to the MGC.

20. The system of claim 19, wherein:
the property comprises a requested media block size; and
the MG determines the actually applied media block size according to the requested media block size and transmits the media.

21. The system of claim 20, wherein the step of determining the actually applied media block size comprises:
using, by the MG, a media block size which is closest to the requested media block size and which is an integral multiple of a minimum media block size decided by a particular media format and/or type to transmit media.

22. The system of claim 19, wherein the step of determining the actually applied media block size comprises:
using, by the MG, a media block size decided by a particular media format and/or type which is not larger than the requested media block size to transmit media.
